Europäisches Patentamt

European Patent Office

Office européen des brevets

(19)

(11) Numéro de publication: **0 142 420**
**A2**

(12) ## DEMANDE DE BREVET EUROPEEN

(21) Numéro de dépôt: **84402119.6**

(22) Date de dépôt: **22.10.84**

(51) Int. Cl.⁴: **B 65 G 47/90**

(30) Priorité: **28.10.83 FR 8317506**
**09.07.84 FR 8411258**

(43) Date de publication de la demande:
**22.05.85 Bulletin 85/21**

(84) Etats contractants désignés:
**AT BE CH DE FR GB IT LI LU NL SE**

(71) Demandeur: **"ATECMI", S.A. dite:**
**7 bis, rue Louis Blanqui**
**F-59760 Grande Synthe(FR)**

(72) Inventeur: **Vasseur, Jackie**
**21 rue des Grillons**
**F-59640 Dunkerque(FR)**

(72) Inventeur: **Vasseur, Roger**
**11 rue Frédéric Chopin**
**F-59640 Dunkerque(FR)**

(74) Mandataire: **Ecrepont, Robert Pierre**
**12 Place Simon Vollant**
**F-59800 Lille(FR)**

(54) **Procédé de préhension d'une couche de récipients et têtes de préhension de toute une couche de tels récipients.**

(57) L'invention se rapporte à un procédé de préhension d'une couche de récipients (23) tels des bouteilles, et aux têtes de préhension de toute couche de tels récipients.

Le procédé est caractérisé en ce qu'on encadre la couche de récipients (23) au moyen de quatre machoires (12 à 15) actionnées simultanément et que l'on combine le pincement des machoire à des vibrations.

Selon une autre caractéristique de l'invention, on agit dans le sens de l'appui des rangées les unes sur les autres avec une force de pincement ($F_1$, $F_2$) plus importante que la force ($f_1$, $f_2$) avec laquelle on agit dans le sens de l'appui des récipients les uns contre les autres dans leur rangée.

Application à l'industrie du matériel de manutention.

Fig: 2.

1

PROCEDE DE PREHENSION D'UNE COUCHE DE RECIPIENTS ET TETES DE
PREHENSION DE TOUTE UNE COUCHE DE TELS RECIPIENTS

L'invention se rapporte à un procédé de préhension d'une couche
de récipients, tels des bouteilles, et aux têtes de préhension de
toute une couche de tels récipients rangés de manière à occuper
sur leur plan d'appui une surface rectangulaire correspondant
généralement à celle du plan d'appui d'une palette de
manutention.

Sur ces palettes, les bouteilles sont généralement stockées
debout, en couche qui, après interposition d'un plateau, par
exemple en carton, sont superposées, l'ensemble des couches étant
ensuite maintenu par enrobage, par exemple en film rétractable.

Dans l'une des directions longitudinale et transversale de chaque
couche, les bouteilles sont alignées et appuyées les unes sur les
autres pour constituer des rangées de bouteilles et ces rangées
sont décalées longitudinalement les unes des autres d'une
distance telle que dans l'autre direction de la couche, les
bouteilles soient disposées en quinconce.

Pour, après retrait de l'enrobage de l'ensemble des couches et de
l'éventuel plateau recouvrant la couche supérieure, permettre la
préhension des bouteilles avec une tête spéciale, plusieurs
procédés sont connus à ce jour. Tous interviennent au niveau des
goulots des bouteilles.

Selon l'un de ces procédés, entre des appuis jouxtant les
génératrices externes des goulots des rangées extrêmes de

0142420

bouteilles et ces rangées extrêmes, mais aussi entre toutes les rangées de goulots de bouteilles, on dispose des boudins gonflables, communément dénommés "vérins", tels ceux commercialisés sous la marque "PRONAIR" vérins que l'on associe à un châssis en vue de leur manutention conjointe, puis on remplit ces vérins de fluide sous pression de manière que leurs faces latérales, qui, avantageusement, peuvent présenter au moins une nervure longitudinale, pincent énergiquement tous les goulots de la couche de bouteilles.

Dans une variante de réalisation de ce procédé, au lieu des vérins du type précité, on dispose aux mêmes endroits des longerons réalisant les mors de pinces que l'on associe également à un chassis en vue de leur manutention conjointe puis que l'on commande, par exemple, à l'aide de vérins, de manière que chacune d'elles saisisse toute une rangée de goulots de bouteilles.

Selon un autre procédé, on saisit également chaque bouteille avec l'un des moyens, tels des ventouses, portés par le chassis pour permettre leur manutention conjointe.

Outre, leur complexité, les têtes de préhension conçues pour mettre en oeuvre ces procédés ont l'inconvénient de ne chacune convenir directement que pour la préhension de couches de bouteilles qui, d'une couche à une autre, ont toujours le même diamètre.

En effet, les quantités et les entraxes des rangées et des bouteilles de chaque rangée varient en fonction du diamètre des bouteilles et la tête doit être adaptée à ces quantités et entraxes.

En fonction du diamètre des bouteilles, il est donc nécessaire soit de disposer de têtes spéciales, soit de perdre le temps nécessaire aux réglages indispensables.

Par ailleurs, dès que les récipients appréhendés sont dépourvus de goulots tels des bocaux, ces têtes deviennent totalement inutilisables.

En outre, il faut souligner que les procédés actuellemnt existants s'adaptent mal à la préhension de couches de récipients ou de bouteilles, dans lesquelles couches certains des récipients ont une section légèrement inférieure ou supérieure à celle des autres récipients.

Un résultat que l'invention vise à obtenir est un procédé de préhension qui saisisse une couche entière de récipients et qui assure le maintien parfait de tous les récipients, y compris ceux qui auraient une section un peu plus faible que celle des autres récipients.

Un autre résultat que l'invention vise à obtenir est la réalisation d'une tête de préhension qui est simple et d'un prix de revient peu élevé.

A cet effet, l'invention a pour objet un procédé de préhension, notamment caractérisé en ce qu'au niveau du corps des récipients, on encadre la couche de récipients sur ses quatre côtés par quatre machoires agissant sur les dits corps, on actionne sensiblement simultanément les machoires de manière à pincer la couche de récipients, et on soumet chaque mâchoire à des vibrations dont l'action se combine à celle du pincement.

Selon une autre caractéristique du procédé, au moyen de deux machoires opposées, on exerce sur la couche un pincement plus important que celui exercé par les deux autres machoires.

La tête de préhension pour la mise en oeuvre du procédé est caractérisée par le fait qu'elle comprend quatre machoires mobiles actionnées par des vérins qui constituent un cadre qui entoure la couche des récipients au niveau de leur corps, et des vibreurs respectivement portés par chacune des machoires.

L'invention sera mieux comprise en se référant à la description ci-après faite à titre d'exemple non limitatif en regard du dessin en annexe qui représente schématiquement :

- figure 1: une vue en perspective de l'ensemble de la machine,

- figure 2: une vue de dessus d'une couche de récipients pincée par les machoires,

- figure 3: une vue en élévation du dispositif de serrage de la première paire de machoires,

- figure 4: une vue du dispositif de serrage de la deuxième paire de machoires dans la position où les machoires sont serrées,

- figure 5: une vue similaire à celle de la figure 3 mais dans la position où les machoires sont déserrées,

- figure 6: une variante de réalisation de la tête de préhension.

La tête de préhension de l'invention est constituée essentiellement par un chassis 1 rectangulaire sur lequel s'articulent quatre paires de culbuteurs 2, 3, 4, 5 actionnés par des vérins 6, 7 auxquels ils sont reliés par des biellettes 8, 9, 10, 11.

Les culbuteurs 2, 5 se terminent par des machoires 12, 13, 14, 15 qui possèdent des garnitures 16 élastiques et qui ont la particularité essentielle de comporter chacune un vibrateur 17.

De préférence, les vibrateurs 17 sont fixés directement sur chaque machoire 12 à 15 et les garnitures sont relativement minces pour ne pas filtrer les vibrations.

L'ensemble peut être soulevé par des élingues 18 que l'on passe dans des anneaux 19, 20, 21, 22 solidaires du chassis 1.

Naturellement, tout autre moyen de levage convient et par exemple un pantographe.

Evidemment, il y a une alimentation en air comprimé qui actionne les vérins tels que 6 et 7 et une alimentation en courant électrique qui actionne les vibrateurs 17.

Ces dispositifs sont largement connus et ne font pas partie de l'invention.

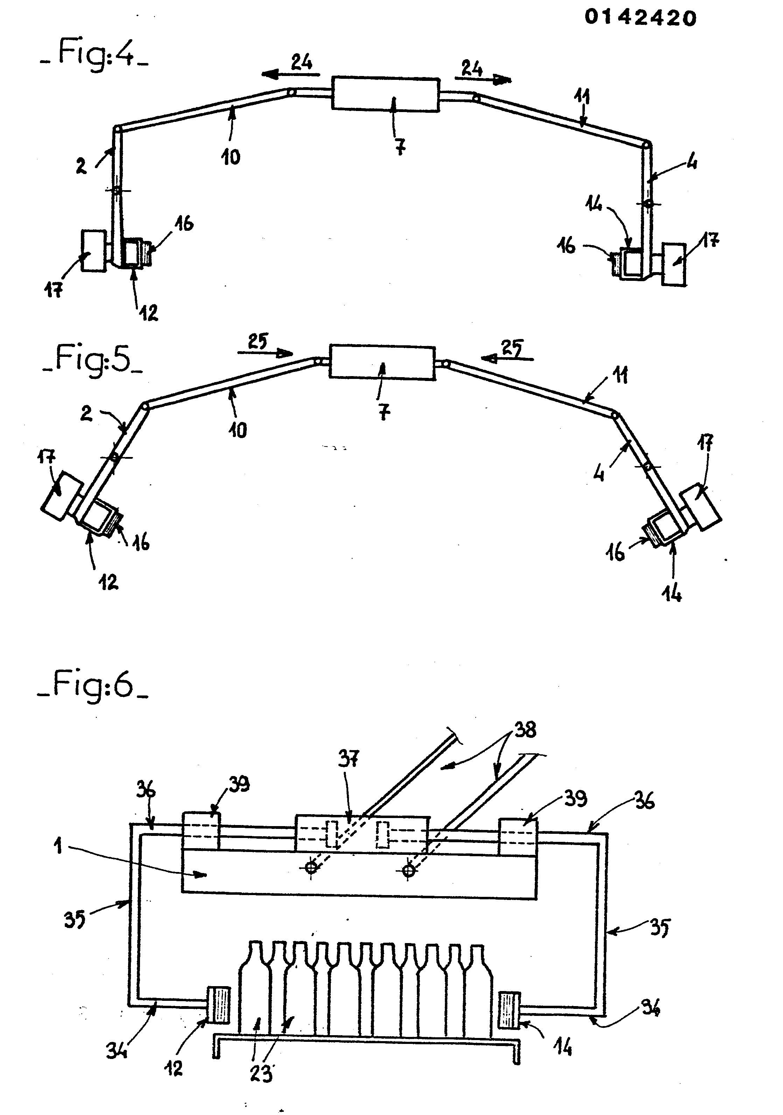

Les emballages tels que les bouteilles 23 étant disposés en couche ayant un plan d'appui rectangulaire ou carré, la tête de préhension se présente au dessus avec les machoires 12, 15 écartées, telles qu'elles sont présentées à la figure 5.

On descend la tête de préhension au niveau voulu, c'est à dire que les garnitures 16 soient en face du corps des bouteilles 23 et non de leur goulot, puis on sert les machoires, en agissant sur les vérins tels que 6, 7 pour que les tiges de ces vérins se déplacent suivant les flèches 24.

Il en résulte un basculement des culbuteurs 2 et 4 ainsi que 3 et 5 pour réaliser le serrage des emballages par pincement.

Une caractéristique essentielle de l'invention réside dans la mise en route simultanée des vibrateurs 17 pendant le serrage.

Pendant le fonctionnement des vibrateurs, les emballages tels que les bouteilles 23 se placent correctement et se serrent convenablement les uns contre les autres ce qui permet de lever l'ensemble sans risque de voir certains emballages rester au sol.

Selon une autre caractéristique du procédé de l'invention, les paires de machoires 12-14, 13-15 exercent une pression différente sur les quatre côtés de la couche de récipients.

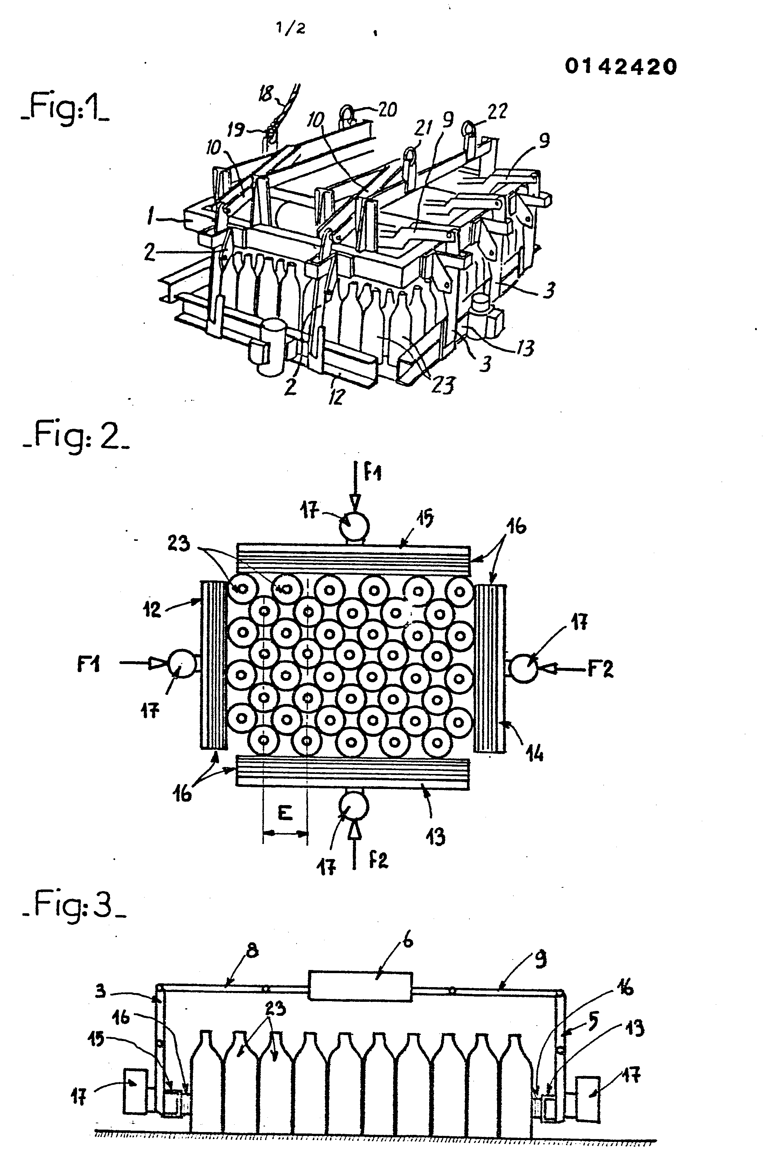

Ainsi, en se référant à la figure 2, on agit dans le sens de l'appui des rangées les unes sur les autres au moyen des machoires 12, 14 avec une force $F_1$, $F_2$ plus importante que les forces $f_1$, $f_2$ avec lesquelles on agit au moyen des machoires 13, 15 dans le sens de l'appui des récipients les uns contre les autres à l'intérieur de leur rangée.

Naturellement, une disposition inverse peut convenir, l'important étant de différencier le pincement exercé par chaque paire de machoires.

Grâce à cette pression différenciée selon le sens et aux vibrations, dans le cas où il y a des récipients de plus faible section, les récipients d'une même rangée peuvent s'écarter légèrement les uns des autres pour que l'entraxe E des rangées puisse se réduire jusqu'à appui de tous les récipients.

Dans le sens de l'appui les uns contre les autres des récipients d'une même rangée, la pression est par exemple juste suffisante pour maintenir la couche.

Selon une caractéristique de l'invention, la tête comprend donc des moyens d'action différenciée des vérins selon qu'ils agissent dans le sens $f_1$, $f_2$ de l'appui des récipients les uns contre les autres dans leur rangée ou dans le sens $F_1$, $F_2$ de l'appui des rangées les unes contre les autres.

Les moyens d'action différenciée consistent, par exemple, en des vérins 6, 7 de forces différentes ou en des réducteurs de la pression du fluide alimentant au moins l'un d'eux.

A titre de variante de réalisation, en figure 6, les machoires 12, 13, 14, 15 sont portées par l'extrémité de la branche inférieure 34 d'un support en forme de "C" 35 dont la branche supérieure 36 est associée directement au vérin 37.

A la manière des culbuteurs, les supports 35 des machoires opposées peuvent être associés à l'une des extrémités opposées d'un même vérin 37 libre en translation axiale ce qui permet un autocentrage des machoires par rapport à la couche.

Quoiqu'il en soit par rapport au chassis, les supports en "C" 35 sont guidés en translation par exemple à l'aide des coulisses ou de manchons 39.

La manutention de la tête de préhension est par exemple assurée par un dispositif du type pantographe, dont l'extrémité a été schématisée en 38 dans la figure 6.

**0142420**

Avantageusement, dans le cas où les récipients sont des bocaux, il est prévu sous le chassis 1 une plaque en matériau magnétisable sur commande, qui assure notamment après pincement de la couche un maintien complémentaire avant le levage de la dite couche.

Naturellement, la présente description n'est donnée qu'à titre indicatif, et on pourrait adopter d'autres mises en oeuvre de l'invention sans pour autant sortir du cadre de celle-ci.

REVENDICATIONS

1. Procédé de préhension d'une couche de récipients (23) rangés debout sur un plan de manière à y occuper une surface rectangulaire, et de manière telle que les récipients (23) sont alignés et appuyés les uns contre les autres pour constituer des rangées de récipients et ces rangées sont décalées longitudinalement les unes des autres d'une distance telle que dans l'autre direction de la couche, les récipients soient disposés en quinconce, CARACTERISE en ce que :
- on encadre la couche de récipients (23) sur ses quatre côtés par quatre machoires (12 à 15) agissant au niveau du corps des récipients (23),
- on actionne sensiblement simultanément les machoires (12 à 15) de manière à pincer la couche de récipients et,
- on soumet les machoires à des vibrations.

2. Procédé selon la revendication 1 caractérisé en ce qu'on exerce au moyen d'une paire de machoires (12, 14/13, 15) une force de pincement plus importante selon une direction de la couche de récipients (23) que selon l'autre direction.

3. Procédé selon la revendication 2 caractérisé en ce qu'on agit dans le sens de l'appui des rangées les unes sur les autres avec une force ($F_1$, $F_2$) plus importante que la force ($f_1$, $f_2$) avec laquelle on agit dans le sens d'un appui des récipients les uns contre les autres dans leur rangée.

4. Tête de préhension d'une couche de récipients (23), rangés debout sur un plan de manière à occuper sur ce plan une surface rectangulaire et ce de manière telle que les récipients sont alignés et appuyés les uns contre les autres pour constituer des rangées de récipients et ces rangées sont décalées longitudinalement les unes des autres d'une distance telle que dans l'autre direction de la couche, les récipients soient disposés en quinconce, laquelle tête comprend, porté par tout moyen apte à assurer sa manutention, tel des anneaux (19, 20, 21, 22) et des élingues (18), ou un pantographe (38), un chassis (1), caractérisée en ce que quatre machoires mobiles (12 à 15) sont associées au chassis (1), en ce qu'elles sont actionnées par des vérins (6, 7) et constituent un cadre qui entoure et pince sur ses quatre côtés la couche de récipients (23) au niveau de leur corps et en ce qu'elle porte des vibreurs (17).

5. Tête de préhension selon la revendication 4 caractérisée en ce qu'elle comprend des moyens d'action différenciée des vérins (6, 7) selon qu'ils agissent dans le sens ($f_1$, $f_2$) de l'appui des récipients (23) les uns contre les autres dans leur rangée ou dans le sens ($F_1$, $F_2$) de l'appui des rangées les unes contre les autres.

6. Tête de préhension selon la revendication 5 caractérisée en ce que les moyens d'action différenciée consistent en des vérins (6, 7) de forces différentes.

7. Tête de préhension selon l'une quelconque des revendications 4 à 6 caractérisée en ce que les moyens en vue d'associer les machoires (12 à 14) au chassis (1) et aux vérins (6, 7) consistent en des culbuteurs (2 à 5) et des biellettes (8 à 11).

8. Tête de préhension selon l'une quelconque des revendications 4 à 6 caractérisée en ce que les moyens en vue d'associer les machoires au chassis (1) et aux vérins (6, 7) consistent en des supports en "C" (35) dont l'extrémité de la branche inférieure (34) porte l'une des machoires et dont la branche supérieure (36) est associée directement au vérin (37).

9. Tête de préhension selon la revendication 6 caractérisée en ce que les supports (35) des machoires opposées sont associés à des extrémités opposées d'un même vérin (37) libre en translation axiale.

10. Tête de préhension selon l'une quelconque des revendications 4 à 9 caractérisée par le fait qu'une plaque magnétisable sur commande est située sous le chassis (1) de manière à assurer le maintien complémentaire avant levage de la couche.

_Fig:1_

_Fig: 2_

_Fig:3_

0142420

_Fig:4_

24 ← | 7 | → 24

11

2

10

16

14

17 16 12 16 14 17

_Fig:5_

25 → | 7 | ← 25

11

2

10

4

17

16

12

14

16 17

_Fig:6_

38

37

36 39 39 36

1

35 35

34 12 23 14 34